# EUROPÄISCHE PATENTANMELDUNG

(11) **EP 3 364 714 A1**
(43) Veröffentlichungstag der Anmeldung: **22.08.2018**
(21) Anmeldenummer: 18156642.3
(22) Anmeldetag: 14.02.2018
(51) Int. Cl.: H05B 3/14, H05B 3/26, E04F 15/02, F24D 13/02

(54) **BEHEIZBARES, MEHRSCHICHTIGES PANEEL AUS HOLZ- UND/ODER HOLZERSATZWERKSTOFFEN ZUR HERSTELLUNG EINES BEHEIZBAREN FUSSBODENS**

(30) Priorität: 16.02.2017 DE 102017103150
(71) Anmelder: Raphael, Tim, 40237 Düsseldorf (DE)
(72) Erfinder: Raphael, Tim, 40237 Düsseldorf (DE)
(74) Vertreter: Sroka, Peter-Christian

(57) **Zusammenfassung**

Die Erfindung betrifft ein beheizbares, mehrschichtiges Paneel aus Holz- und/oder Holzersatz-Werkstoffen zur Herstellung eines Fußbodens enthaltend übereinander geschichtet
- eine untere Bodenplatte (2)
- eine Wärme erzeugende Heizschicht (4.1),
- eine obere Deckplatte (3), sowie
- elektrische Anschlusselemente zur Stromversorgung der Wärme erzeugenden Heizschicht (4.1),
dass dadurch gekennzeichnet ist, dass das Paneel ein Nut-/Feder-Paneel mit Nuten (7) und Federn (8) ist, derart, dass bei zur Bildung eines Fußbodens aus mehreren nebeneinander liegenden Paneelen diese Paneele zusammensteckbar sind, dass an der Unterseite der Nuten (7) untere Leiterstrukturen (7.1) und an der Oberseite der Nuten (7) obere Leiterstrukturen (7.2) und an der Unterseite der Federn (8) untere Leiterstrukturen (8.1) und an der Oberseite der Federn (8) obere Leiterstrukturen (8.2) derart angebracht sind, dass bei zusammengesteckten Nuten-/Feder-Paneelen einerseits die unteren Leiterstrukturen (7.1) der Nuten (7) die an der Federunterseite angebrachten unteren Leiterstrukturen (8.1) der Federn (8) und andererseits die oberen Leiterstrukturen (7.2) der Nuten (7) die oberen Leiterstrukturen (8.2) der Federn (8) kontaktieren, dass elektrische Anschlusselemente zur Stromversorgung der Wärme erzeugenden Heizschicht (4.1) vorgesehen sind, und dass die Leiterstrukturen von mehreren zu einem Fußboden verlegten Paneele elektrisch parallel geschaltet sind.

## Beschreibung

Die Erfindung betrifft ein beheizbares, mehrschichtiges Paneel gemäß dem Oberbegriff des Patentanspruchs 1.

In der EP 2 733 280 B1 ist ein Wärme erzeugender Niedertemperatur-Holzfußboden beschrieben, der übereinander geschichtet
- eine reflektierende Schicht 41,
- untere Basisschicht 4,
- eine feuerfeste Schicht 5,
- eine Wärme erzeugende Schicht 3 aus leitfähigem Kohlefaserpapier,
- eine feuerfeste Schicht 5,
- eine obere Basisschicht 2 und
- eine oberste Dekorschicht 1 aufweist.

An den die Breite begrenzenden Kanten an beiden Enden der Wärme erzeugenden Schicht 3 sind ein Paar Kupferpole 31 angebracht, deren Breite mit der Breite der Wärme erzeugenden Schicht 3 gleich ist. An die Kupferpole sind elektrische Anschlüsse 6 in Form von Steckeranschlüssen 61, Steckbuchsenanschlüssen 62, Verbindungssteckeranschlüssen 65, Verbindungssteckbuchsenanschlüssen 64 und Verbindungsdrähte 53 angeschlossen. Die Steckbuchsenanschlüsse 62 sind durch die untere Basisschicht 4 hindurchgeführt, d. h. die Stromversorgung erfolgt durch die untere Basisschicht 4 hindurch von unten her.

Bei Google werden unter dem Suchwort "elektrische Fußbodenheizung" diverse elektrische Fußbodenheizungen erörtert, die mittels Trittschalldämmung, Isolation usw. auch unter Laminat-, Parkett-, Teppich- und PVC-Böden verlegt werden können.

Der Erfindung liegt die Aufgabe zugrunde, ein von den bekannten elektrischen Fußbodenheizungen abweichendes elektrisches Fußbodenheizungssystem zu schaffen.

Zur Lösung dieser Aufgabe wird ein beheizbares, mehrschichtiges Paneel gemäß dem Kennzeichen des Patentanspruchs 1 beschrieben.

Mehrere solcher Paneele können zu einem elektrisch beheizbaren Fußboden zusammengefügt bzw. ineinander gesteckt werden, wobei die Wärme erzeugende Heizschicht in das innere der Paneele integriert ist.

Bevorzugte Ausführungsformen der Erfindung sind in den Unteransprüchen behandelt.

Die Erfindung wird im Folgenden anhand der Zeichnung näher beschrieben:
- Figur 1: zeigt eine Draufsicht auf ein mehrschichtiges Paneel mit Nut-/Federstruktur;
- Figur 2: zeigt in isometrischer Darstellung eine Explosionsdarstellung des erfindungsgemäßen mehrschichtigen Paneels;
- Figur 3: zeigt bei fehlender Deckplatte eine Draufsicht auf die Heizschicht des erfindungsgemäßen Paneels;
- Figur 4: zeigt eine Schnittansicht in Richtung der Pfeile A - A in Figur 3;
- Figur 5: zeigt in vergrößerter Darstellung das Detail V aus Figur 4;
- Figur 6: zeigt in vergrößerter Darstellung das Detail W aus Figur 4;
- Figur 7: zeigt in vergrößerter Darstellung das Detail X aus Figur 3;
- Figur 8: zeigt in vergrößerter Darstellung das Detail Y aus Figur 3;

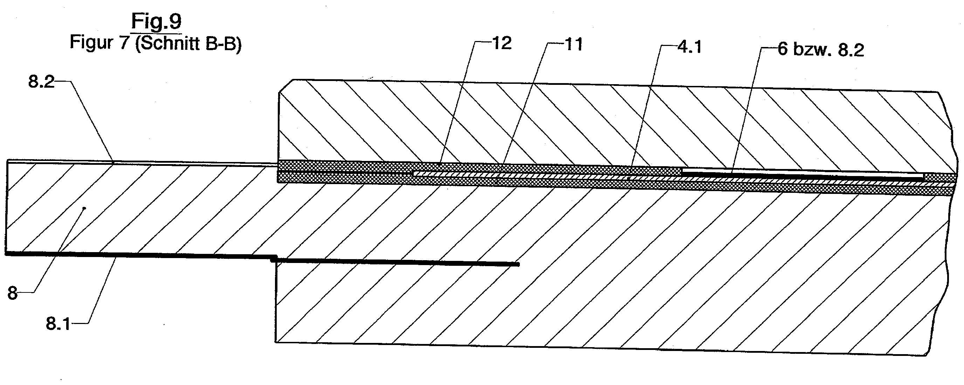

- Figur 9: zeigt in vergrößerter Darstellung eine Schnittansicht in Richtung den Pfeilen B - B in Figur 7;

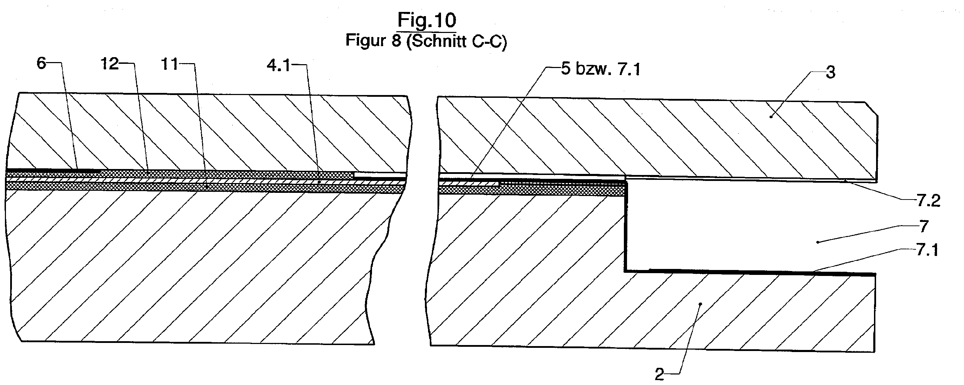

- Figur 10: zeigt in vergrößerter Darstellung eine Schnittansicht gemäß den Pfeilen C - C in Figur 8;
- Figur 11: zeigt eine Schnittansicht von zwei zusammengefügten Paneelen, von den das eine Paneel an eine an einer Raumwand anliegenden Anschlusskontakt-Trägerleiste angeschlossen ist;
- Figur 12: zeigt in isometrischer Darstellung eine Seitenansicht der an ein Paneel angeschlossenen Anschlusskontakt-Trägerleiste;
- Figur 13: zeigt in isometrischer Darstellung eine Seitenansicht der Anschlusskontakt-Trägerleiste von unten her betrachtet, wodurch die untere Leitungsstruktur sichtbar ist;
- Figur 14: zeigt in isometrischer Darstellung eine Seitenansicht der Anschlusskontakt-Trägerleiste von oben her betrachtet, wodurch die obere Leiterstruktur sichtbar ist;
- Figur 15: zeigt eine Vorderansicht der Anschlusskontakt-Trägerleiste;
- Figur 16: zeigt eine Draufsicht der Anschlusskontakt-Trägerleiste;
- Figur 17: zeigt eine Schnittansicht gemäß den Pfeilen D - D in Figur 15;
- Figur 18: zeigt eine Schnittansicht gemäß den Pfeilen E - E in Figur 15;
- Figurl9: zeigt in vergrößerter Darstellung den Austritt des Kontaktstiftes 14 aus der Anschlusskontakt-Trägerleiste gemäß Detail K aus Figur 15;
- Figur20: zeigt in vergrößerter Darstellung den Austritt des Kontaktstiftes 15 aus der Anschlusskontakt-Trägerleiste gemäß Detail L aus Figur 15;
- Figur 21: zeigt in vergrößerter Darstellung eine Schnittansicht des Details S aus Figur 11;
- Figur 22: zeigt in vergrößerter Darstellung eine Schnittansicht des Details T in Figur 11.

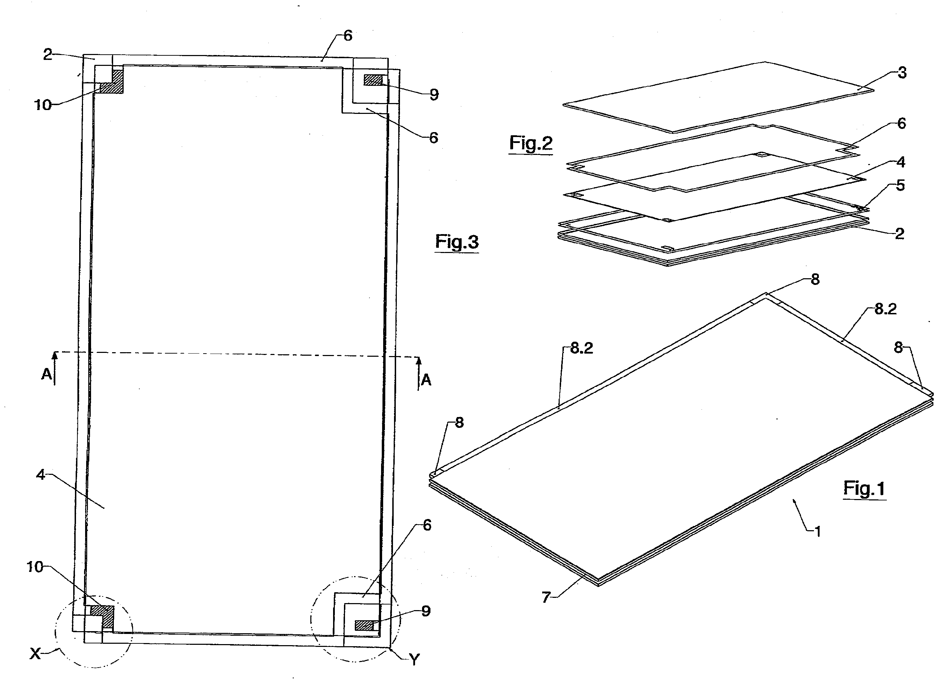

Das in Figur 1 dargestellte Paneel 1 besteht gemäß Figur 2 aus einer Bodenplatte 2, einer Deckplatte 3, einer unteren Leiterstruktur 5 einer oberen Leiterstruktur 6 und einer Heizmatte 4. Vorteilhafterweise können eine untere reflektierende Schicht, eine Trittschalldämpfung oder weitere Schichten vorgesehen sein.

Die Feder 8 ist im Wesentlichen vorzugsweise nahezu über ihre gesamte Länge mit unteren und oberen Leiterstrukturen 8.1 bzw. 8.2 vorzugsweise in Form von elektrisch leitenden Bändern, versehen.

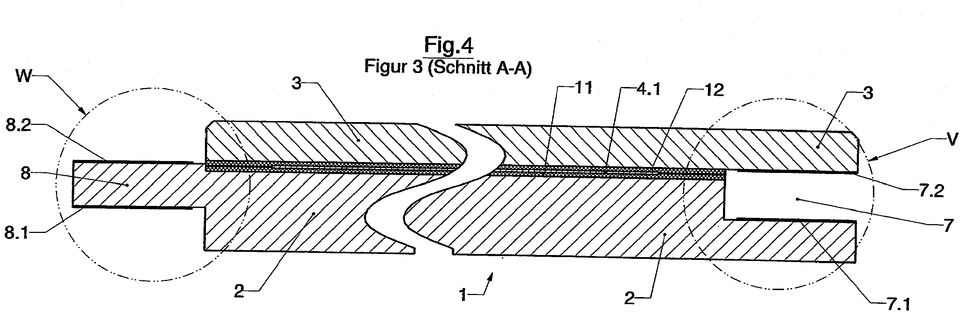

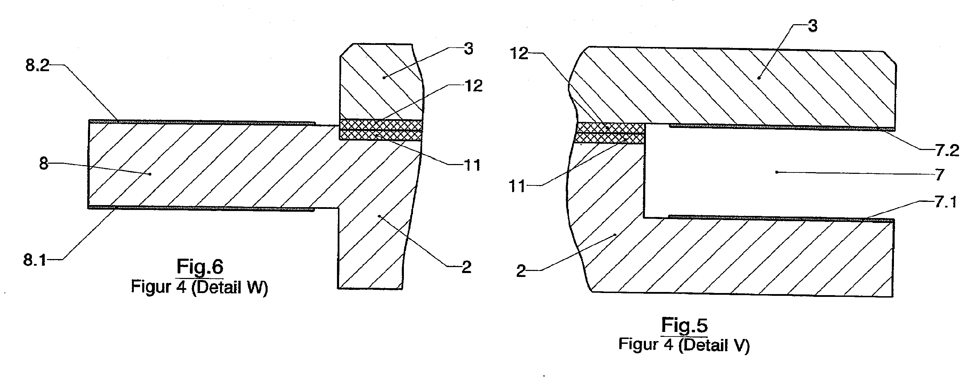

Figur 5 zeigt in vergrößerter Darstellung das Detail V aus Figur 4. Figur 6 zeigt in nochmals vergrößerter Darstellung das Detail W aus Figur 4.

Die in Figur 2 schematisiert dargestellte Heizmatte 4 besteht aus einer inneren elektrisch leitenden Heizschicht 4.1, die zwischen unteren und oberen Isolierschichten 11 bzw. 12 eingebettet ist.

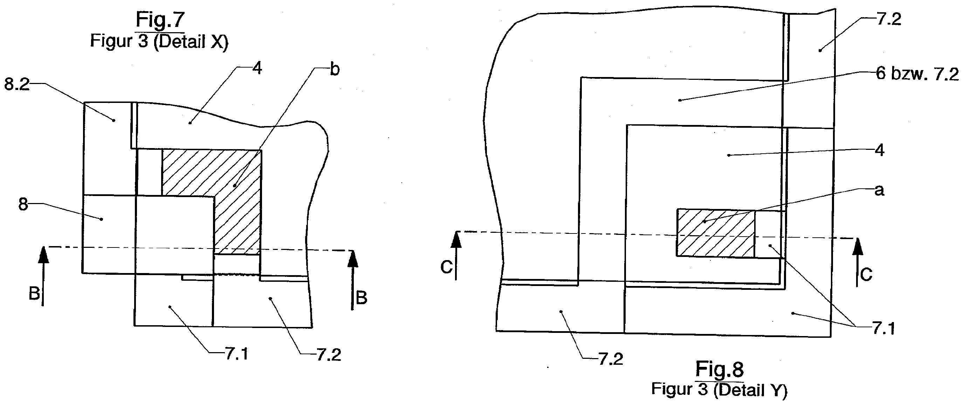

In den Figuren 7 und 8 sind in vergrößerter Darstellung und der Draufsicht die Eckbereiche X bzw. Y aus Figur 3 dargestellt. Gemäß Figur 8 sind die obere Leiterstruktur 6 bzw. die untere Leiterstruktur 7.2 nicht bis zu den Eckpunkten hindurchgeführt sondern verlaufen im Wesentlichen in Form eines By-Passes unter Umgehung der unmittelbare Eckbereiche. Die obere Leitestruktur 6 verläuft in dem Eckbereich oberhalb der Isolationsschicht 12 der Heizmatte 4. In diesem Eckbereich ist angedeutet durch die schraffierte Fläche a ein Teil der Isolationsschicht 12 entfernt, wodurch die Heizschicht 4.1 mit der unteren Leiterstruktur 5/7.1 elektrisch kontaktiert.

In dem in Figur 7 dargestellten, bezogen auf Figur 3 links unteren Eckbereich ist im Bereich der schraffierten Fläche b ein Teil der Isolationsschicht 12 der Heizmatte 4 entfernt, wodurch die Heizschicht 4.1 mit der oberen Leiterstruktur 6/7.2/8.2 elektrisch kontaktiert. Gemäß Figur 7 ist in dem Eckbereich die untere Leiterstruktur 7.1 der Nut 7 sichtbar.

Gemäß Figur 8 sind die als "By-Pass" geführten Leiterstrukturen 6 bzw. 7.2 elektrisch isoliert gegenüber der Heizschicht 4.1 und gegenüber der unteren Leiterstruktur 7.1 in der Nut 7.

Paneele, die in Abhängigkeit der Verlegetechnik in verkürztem Zustand benötigt werden, sind mit jeweils zwei Kontakt- bzw. Anschlussbereiche für die oberen bzw. unteren Leiterstrukturen ausgestattet, damit im Falle einer Teilung des Paneels (zum Beispiel durch Absägen) die Heiz- und Leitungsfunktion weiterhin gegeben ist.

Der Stromfluss verläuft von der oberen Leiterstruktur durch die Heizschicht in die untere Leiterstruktur über jeweils zwei mögliche Kontaktstellen. Im Falle einer Teilung des Paneels wird die Heizfunktion durch die verbleibende Kontaktstelle aufrechterhalten.

Jedes Paneel ist relativ zu den anderen Paneelen elektrisch parallel geschaltet. Dadurch kann ein Paneel ausfallen, ohne die Gesamtheizfunktion der Gesamtfläche zu beeinträchtigen. Die oberen Leiterstrukturen (Nut und Feder Verbindung) bleiben weiterhin kontaktiert sowie die unteren Leiterstrukturen (Nut und Feder Verbindung) bleiben weiterhin kontaktiert.

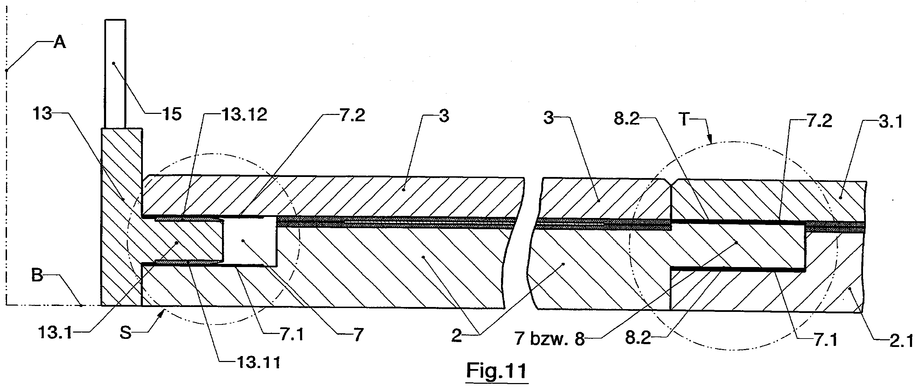

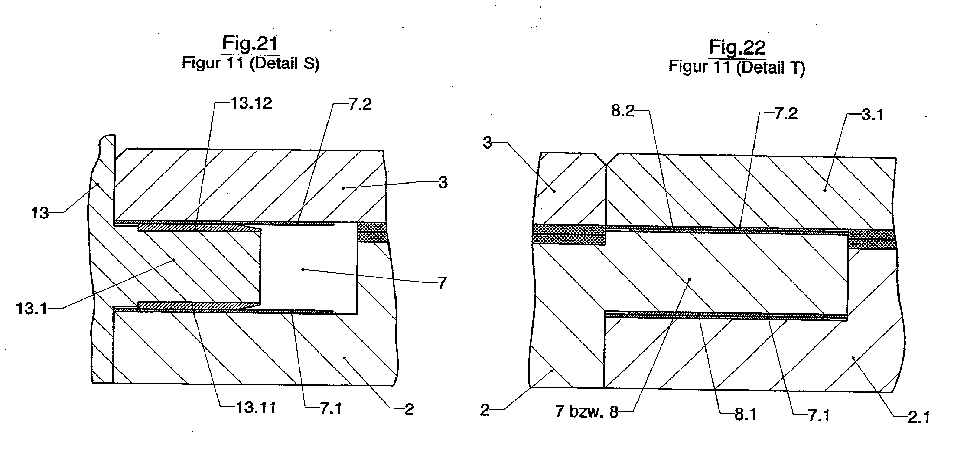

Zur Stromversorgung der Heizschicht 4.1 wird im Folgenden Bezug genommen auf die Figuren 11 bis 21.

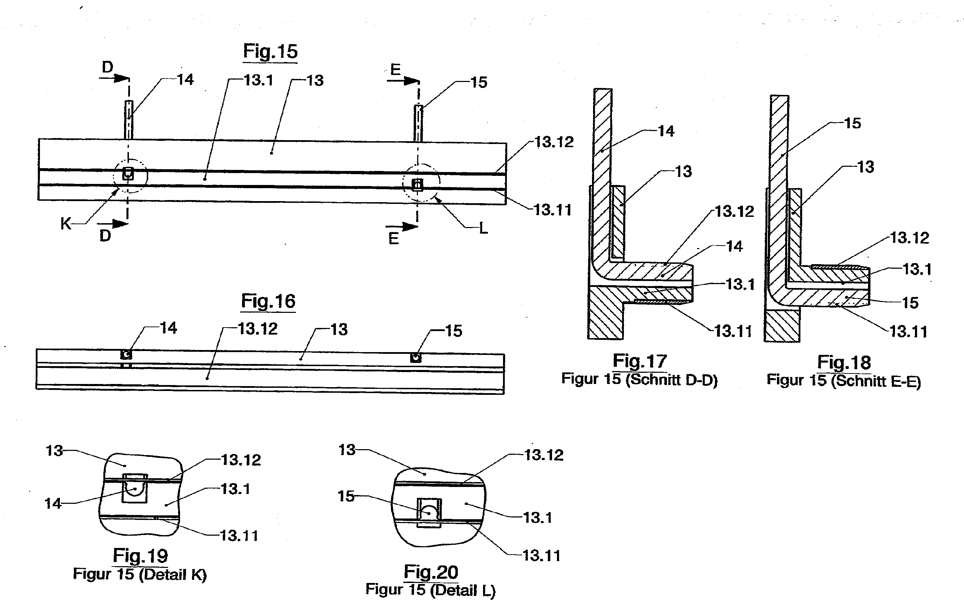

Eine in den Figuren 11 und 16 dargestellte, z. B. gegen eine Raumwand A anliegende und auf dem Boden B abgestützte Anschlusskontakt-Trägerleiste 13 enthält ein Federelement 13.1, das an die Nut 7 eines Paneels 1 angepasst ist.

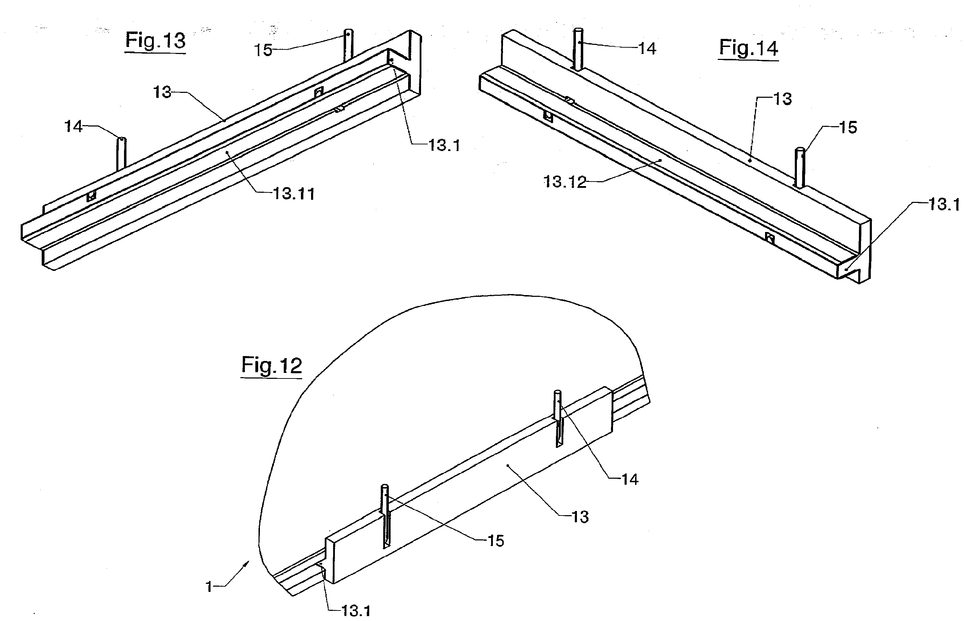

Gemäß den Figuren 13 und 14 ist die Feder 13.1 der Anschlusskontakt-Trägerleiste 13 an der Oberseite und an der Unterseite entsprechend den Leiterstrukturen 8.1 bzw. 8.2 der Feder 8 ebenfalls mit unteren und oberen Leiterstrukturen 13.11 bzw. 13.12 versehen.

Die Figuren 15 bis 20 zeigen Ansichten der Anschlusskontakt-Trägerleiste 13 sowie Detailansichten K und L, die in vergrößerter Darstellung in den Figuren 19 und 20 dargestellt sind.

In die Anschlusskontakt-Trägerleiste 13 und das Federelement 13.1 sind Kontaktstifte 14 und 15 integriert. Der Kontaktstift 14 liegt im fertigen Montagezustand gegen die obere Leiterstruktur 13.12 an, während der Kontaktstift 15 gegen die untere Leiterstruktur 13.11 anliegt, wie es in den Figuren 17 und 18 im Einzelnen dargestellt ist.

### Bezugszeichenliste

- A: Wand
- B: Fußboden
- 1: Paneel
- 2: Bodenplatte
- 3: Deckplatte
- 4: Heizmatte
- 4.1: Heizschicht
- 5: untere Leiterstruktur
- 6: obere Leiterstruktur
- 7: Nut
- 7.1: untere Leiterstruktur in der Nut 7
- 7.2: obere Leiterstruktur in der Nut 7
- 8: Feder
- 8.1: untere Leiterstruktur an Feder 8
- 8.2: obere Leiterstruktur an Feder 8
- 9: Kontaktfläche zwischen Heizschicht 4.1 und unterer Leiterstruktur 7.1
- 10: Kontaktfläche Heizschicht 4.1 und oberer Leiterstruktur 8.1
- 11: elektrische Isolierschicht zwischen Heizschicht 4.1 und unterer Leiterstruktur 7.1
- 12: elektrische Isolierschicht zwischen Heizschicht 4.1 und oberer Leiterstruktur 8.1
- 13: Anschlusskontakt-Trägerleiste
- 13.1: Federelement an Trägerleiste 13
- 13.11: untere Leiterstruktur
- 13.12: obere Leiterstruktur
- 14: Kontaktstifte
- 15: Kontaktstifte

## Patentansprüche

1. Beheizbares, mehrschichtiges Paneel aus Holz- und/oder Holzersatz-Werkstoffen zur Herstellung eines Fußbodens enthaltend übereinander geschichtet
- eine untere Bodenplatte (2)
- eine Wärme erzeugende Heizschicht (4.1),
- eine obere Deckplatte (3), sowie
- elektrische Anschlusselemente zur Stromversorgung der Wärme erzeugenden Heizschicht (4.1)
**dadurch gekennzeichnet, dass** das Paneel ein Nut-/Feder-Paneel mit Nuten (7) und Federn (8) ist, derart, dass bei zur Bildung eines Fußbodens aus mehreren nebeneinander liegenden Paneelen diese Paneele zusammensteckbar sind, dass an der Unterseite der Nuten (7) untere Leiterstrukturen (7.1) und an der Oberseite der Nuten (7) obere Leiterstrukturen (7.2) und an der Unterseite der Federn (8) untere Leiterstrukturen (8.1) und an der Oberseite der Federn (8) obere Leiterstrukturen (8.2) derart angebracht sind, dass bei zusammengesteckten Nuten-/Feder-Paneelen einerseits die unteren Leiterstrukturen (7.1) der Nuten (7) die an der Federunterseite angebrachten unteren Leiterstrukturen (8.1) der Federn (8) und andererseits die oberen Leiterstrukturen (7.2) der Nuten (7) die oberen Leiterstrukturen (8.2) der Federn (8) kontaktieren, dass elektrische Anschlusselemente zur Stromversorgung der Wärme erzeugenden Heizschicht (4.1) vorgesehen sind, und dass die Leiterstrukturen von mehreren zu einem Fußboden verlegten Paneele elektrisch parallel geschaltet sind.

2. Paneel nach Anspruch 1, **dadurch gekennzeichnet, dass** die Leiterstrukturen (7.1; 7.2; 8.1; 8.2) elektrisch leitende Bänder sind, die an die Heizschicht (4.1) angeschlossen sind.

3. Paneel nach Anspruch 1 oder 2, **dadurch gekennzeichnet, dass** die Wärme erzeugende Heizschicht (4.1) eine elektrisch leitende Kohlenstoffschicht.

4. Paneel nach Anspruch 1 oder 2, **dadurch gekennzeichnet, dass** die Wärme erzeugende Heizschicht (4.1) aus leitfähigem Kohlefaserpapier besteht.

5. Paneel nach Anspruch 1 oder 2, **dadurch gekennzeichnet, dass** die Wärme erzeugende Heizschicht (4.1) aus elektrisch leitenden Heizdraht besteht.

6. Paneel nach Anspruch 1 oder 2, **dadurch gekennzeichnet, dass** die Wärme erzeugende Heizschicht (4.1) zwischen zwei Isolierschichten (11, 12) eingebettet ist, und dass jede Isolierschicht (11 bzw. 12) mindestens zwei Aussparungen (a bzw. b) aufweist, derart, dass in diesen Aussparungsbereichen die Heizschicht (4.1) mindestens ein elektrisches Anschlusselement kontaktiert, dass an eine der Leiterstrukturen (7.1 bzw. 7.2; 8.1 bzw. 8.2) angeschlossen ist.

7. Paneel nach einem der Ansprüche 1 bis 3, **dadurch gekennzeichnet, dass** die Leiterstrukturen vor den Paneelecken mit Abstand enden und durch an den Paneelecken vorbei geführten By-Pass-Leiterstrukturen miteinander verbunden sind.

8. Anordnung zum Anschließen von mindestens eines Paneels nach einem der Ansprüche 1 bis 4, an eine Stromversorgungseinheit, **dadurch gekennzeichnet, dass** diese Anordnung als einer Anschlusskontakt-Trägerleiste (13) ausgebildet ist, die eine in eine Nut (7) eines Paneels (1) einsteckbares Federelement (13.1) aufweist, an dessen Unterseite eine untere Leiterstruktur (13.11) und an dessen Oberseite eine obere Leiterstruktur (13.12) angebracht ist, und dass durch die Anschlusskontakt-Trägerleiste (13) und das Federelement (13.1) zwei Kontaktstifte (14 bzw. 15) verlaufen, von denen der Kontaktstift (14) die obere Leiterstruktur (13.12) und der Kontaktstift (15) die untere Leiterstruktur (13.11) kontaktieren.

9. Anordnung zum Anschließen von mindestens eines Paneels nach Anspruch8, **dadurch gekennzeichnet, dass** die Leiterstrukturen (13.11; 13.12) elektrisch leitende Bänder sind.
